# EUROPÄISCHE PATENTSCHRIFT

(11) **EP 1 673 241 B1**
(45) Veröffentlichungstag und Bekanntmachung des Hinweises auf die Patenterteilung: **24.11.2010**
(21) Anmeldenummer: 04789960.4
(22) Anmeldetag: 11.10.2004
(51) Int. Cl.: B60G 7/00, B60G 9/00, F16C 11/06

(54) **KRAFTFAHRZEUG**
MOTOR VEHICLE
VEHICULE A MOTEUR

(30) Priorität: 15.10.2003 DE 10348645
(43) Veröffentlichungstag der Anmeldung: 28.06.2006
(73) Patentinhaber: ZF FRIEDRICHSHAFEN Aktiengesellschaft, 88038 Friedrichshafen (DE)
(72) Erfinder: BUHL, Reinhard, 49163 Bohmte (DE); RICHTER, Reinhard, 49163 Bohmte (DE); SCHMUDDE, Werner, 49593 Bersenbrück (DE)
(86) Internationale Anmeldenummer: PCT/DE2004/002254
(87) Internationale Veröffentlichungsnummer: WO 2005/039902

(56) Entgegenhaltungen:
- EP-A- 1 254 789
- DE-A- 19 624 242
- DE-A1- 4 011 179
- FR-A- 2 054 788
- FR-A- 2 693 955
- US-A- 1 643 970
- US-A- 2 607 617
- US-A1- 2002 136 596
- US-B1- 6 390 485
- ANONYMOUS: "One piece toe link assembly" RESEARCH DISCLOSURE, KENNETH MASON PUBLICATIONS, HAMPSHIRE, GB, Bd. 435, Nr. 41, Juli 2000 (2000-07), XP007126409 ISSN: 0374-4353

## Beschreibung

Die Erfindung betrifft ein Kraftfahrzeug, insbesondere Nutzfahrzeug, mit einem Fahrzeugchassis und eine eine Starrachse aufweisende Hinterachsanordnung. Zwischen dem Fahrzeugchassis und der Starrachse ist dabei ein sogenannter Panhardstab angeordnet. Zusätzlich oder bei alternativen Hinterachsanordnungen kann ein zwischen der Achse und dem Fahrzeugchassis angeordneter Längslenker verwendet werden.

Bei Kraftfahrzeugen, insbesondere Nutzfahrzeugen, mit einem Fahrzeugchassis kommen nach wie vor Hinterachsanordnungen mit einer Starrachse zum Einsatz. Für die Abstützung von auf die Hinterachse einwirkenden Seitenkräften, welche beispielsweise aus Kurvenfahrten resultieren, werden zwischen dem Fahrzeugchassis und der Starrachse im allgemeinen Panhardstäbe eingesetzt. Demgegenüber werden zur Abstützung von im Fahrbetrieb auftretenden Längskräften zwischen dem Fahrzeugchassis und der Starrachse Längslenker verwendet. Zum Ausgleich der aus dem Federweg resultierenden Relativbewegungen zwischen Starrachse und Fahrzeugchassis sind der Panhardstab als auch die Längslenker jeweils schwenkbeweglich mit der Starrachse einerseits und dem Fahrzeugchassis andererseits verbunden.

Aus der DE 196 24 242 A1 ist ein gattungsgemäßes Kraftfahrzeug mit einem Panhardstab bekannt, welcher an seinen jeweiligen Enden Radialgelenke aufweist, mit denen er einerseits an der Starrachse und andererseits an dem Fahrzeugchassis gelenkig angebunden ist. Insbesondere die Anbindung des Panhardstabes an das Fahrzeugchassis mittels eines Radialgelenkes erfordert chassisseitig einen separaten Lagerbock, welcher das Fahrzeuggewicht nachteilig erhöht. Dieser Lagerbock benötigt des Weiteren einen zusätzlichen Montageaufwand, bedingt durch Schraub- und/oder Schweißvorgänge, verbunden mit zusätzlichen Anbauteilen und Fertigungsschritten. Insbesondere die hierbei auftretende Bearbeitung von Flansch- oder gegebenenfalls Kegelverbindungen ist sehr aufwendig, wodurch nachteilig ein erhöhter Kostenaufwand entsteht. Ferner erlauben die verwendeten Radialgelenke lediglich einen kleinen Schwenkwinkel zwischen Lager und Panhardstabachse, wodurch sehr genaue und dadurch die Kosten erhöhende Fertigungstoleranzen notwendig sind.

Diese für den Panhardstab beschriebenen Nachteile treffen auch für die ebenfalls in der DE 196 24 242 A1 gezeigten Längslenker zu. Diese Längslenker sind ebenfalls mittels zweier Radialgelenke einenends mit der Starrachse und anderenends mit dem Fahrzeugchassis schwenkbeweglich verbunden.

Die FR 2 054 788 A zeigt einen Panhardstab für ein Kraftfahrzeug, der mittels eines Axialgelenkes schwenkbeweglich am Fahrzeugchassis angelenkt ist. Die Gelenkkugel des Kugelgelenks ist mit der Lagerschale in einem aufgeweiteten Abschnitt des Rohres des Panhardstabes aufgenommen, was nachteilig hinsichtlich der Fertigung ist, da das Rohr und die Aufnahme der Gelenkkugel im Rohr aufwendig gestaltet ist. Mit dieser Anordnung ist ferner keine Längsverstellung des Panhardstabes möglich.

Nach der US 1,643,970 ist der Kugelzapfen eines Axialgelenkes in das Rohr eines Lenkers eingesteckt, der hier dargestellte Lenker bildet aber keine montierbare Einheit, da die Gelenkkugel direkt in eine am Fahrzeugchassis fest angeordnete Lageraufnahme, mit dem Fahrzeugchassis zugeordneter Lagerschale eingesetzt ist. In das Rohr des Lenkers werden somit lediglich Kugelzapfen eingesetzt.

Die DE 40 11 179 A1 zeigt die gelenkige Anbindung eines Lenkers sowie eines Stabilisators über jeweils eine Kugelgelenkverbindung an einen Radträger, wobei die jeweiligen Kugelzapfen auf einer gemeinsamen Achse angeordnet und über eine Verschraubung mit einander verbunden sind. Dabei sind die Kugelzapfen in einer gemeinsamen Aufnahme am Radträger festgelegt, wobei die Festlegung am Radträger mittels der Verschraubung der beiden Kugelzapfen gegeneinander erfolgt.

Die US 2,607,617 zeigt einen Längslenker, welcher sowohl chassisseitig als auch achsseitig jeweils über ein als Radialgelenk ausgebildetes Molekulargelenk angebunden ist. Das Molekulargelenk weist dabei einen in mit einem Gewinde versehene Bohrung eingeschraubten Lagerzapfen auf, der in der Bohrung über eine Klemmverbindung festgelegt ist.

In der US 2002/0136596 A1 ist eine Klemmverbindung für einen in ein Rohr eingesetzten Lagerzapfen eines Radialgelenkes gezeigt. Dabei handelt es sich hier um die Anwendung in einer Spurstange.

Die EP 1 254 789 A1 zeigt eine Spurstange wobei in das Verbindungsrohr der Spurstange ist ein Axialgelenk, ausgebildet als Gelenkstück, mit einem Kugelzapfen eingesetzt und dort mittels einer Pressverbindung gehalten ist. Eine Anbindung dieser Spurstange, welche lediglich geringe Kräfte überträgt und der Führung eines einzelnen Rades dient, ist nicht gezeigt.

Aufgabe der Erfindung ist es, eine Anbindung eines Panhardstabes, welcher zwischen einem Fahrzeugchassis und einer zu einer Hinterachsanordnung zugeordneten Starrachse angeordnet ist, zu schaffen, die die angeflührten Nachteile des Standes der Technik wirksam vermeidet und einfach gestaltet ist.

Diese Aufgabe wird ausgehend von einem Kraftfahrzeug gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Das erfindungsgemäße Kraftfahrzeug mit einem zwischen dem Fahrzeugchassis sowie einer Starrachse angeordnetem Panhardstab ist gekennzeichnet durch die unmittelbare schwenkbewegliche Anlenkung des Panhardstabes am Fahrzeugchassis mit einem Axialgelenk. Durch diese Anordnung wird vorteilhafterweise die Verwendung von Lagerböcken, Flanschen oder ähnlich zur Anbindung des Panhardstabes am Fahrzeugchassis vermieden. In direktem Zusammenhang hierzu spart diese Anbindung Gewicht und Bauteile ein und erfordert somit wesentlich weniger Montage- und Fertigungsschritte, wodurch insgesamt wesentlich weniger Kosten verursacht werden. Erfindungsgemäß ist weiterhin vorgesehen, dass das Axialgelenk als Kugelgelenk ausgebildet ist. Die Erfindung zeichnet sich ferner dadurch aus, dass der Panhardstab aus einem Rohr mit zwei, als ein Radialgelenk und ein Axialgelenk ausgeführten Gelenkstücken gebildet ist, wobei die Gelenkstücke mittels eines dem Gelenkstück zugeordneten Lager- oder Kugelzapfen in das Rohr eingesetzt werden. Ein zusätzlicher Toleranzausgleich wird dabei dadurch erzielt, dass zumindest ein Gelenkstück verschieblich in dem Rohr gehalten ist, wodurch eine Längenverstellung des Panhardstabes ermöglicht wird. Gehalten wird das Gelenkstück auf besonders einfache Weise erfindungsgemäß über eine Klemmverbindung zwischen dem Rohr und dem in das Rohr eingesetzten Ende des Lager- bzw. Kugelzapfens eines der beiden Gelenkstücke.

In einer vorteilhaften Ausgestaltung weist das Kugelgelenk einen Kugelzapfen mit einer Gelenkkugel auf. Die Gelenkkugel ist in einer in einem Lagergehäuse aufgenommenen Lagerschale gleit- und schwenkbeweglich aufgenommen ist. Das Lagergehäuse ist weiterhin mit einem Gewindebolzen versehen, welcher in einer am Fahrzeugchassis vorgesehenen Bohrung aufgenommen wird. Das Lagergehäuse kann somit beispielsweise mit einer Gewindemutter über den Gewindebolzen mit dem Fahrzeugchassis verschraubt werden. Hierzu ist an dem Lagergehäuse vorteilhafterweise eine Schlüsselansatz vorgesehen. Diese schwenkbewegliche Anbindung ermöglicht auf Grund des großen Schwenkbereichs des Axialgelenks einen Ausgleich von größeren Toleranzen gegenüber der herkömmlichen Anbindung. Des weiteren minimiert diese Anbindungsform die notwendigen Anbindungsteile und Montageschritte auf eine minimale Anzahl, wodurch die Fertigungskosten weiter reduziert werden.

Die Klemmverbindung ist bevorzugt aus einer Schelle, sowie einem mit der Schelle zusammenwirkenden geschlitzten Ende des Rohres gebildet, wobei die Schelle das geschlitzte Ende des Rohres gegen das in das Rohr eingesetzte Ende des Lager- bzw. Kugelzapfens eines der beiden Gelenkstücke zusammendrückt.

Weitere die Erfindung verbessernde Maßnahmen sind in den Unteransprüchen angegeben oder werden nachstehend mit der Beschreibung eines bevorzugten Ausführungsbeispieles der Erfindung anhand der Figuren näher dargestellt. Es zeigt:
- Fig. 1: Schematischer Aufbau einer Hinterachsanordnung mit einem erfindungsgemäßen Panhardstab in der Draufsicht,
- Fig. 2: Schematischer Aufbau einer Hinterachsanordnung mit einem erfindungsgemäßen Panhardstab in der Heckansicht gemäß Pfeil A in Fig. 1,
- Fig. 3: Detailansicht eines erfindungsgemäßen Panhardstabes in einer dreidimensionalen Ansicht,
- Fig. 4: Zweidimensionale Ansicht eines erfindungsgemäßen Panhardstabes mit Anbindung an das Fahrzeugchassis.

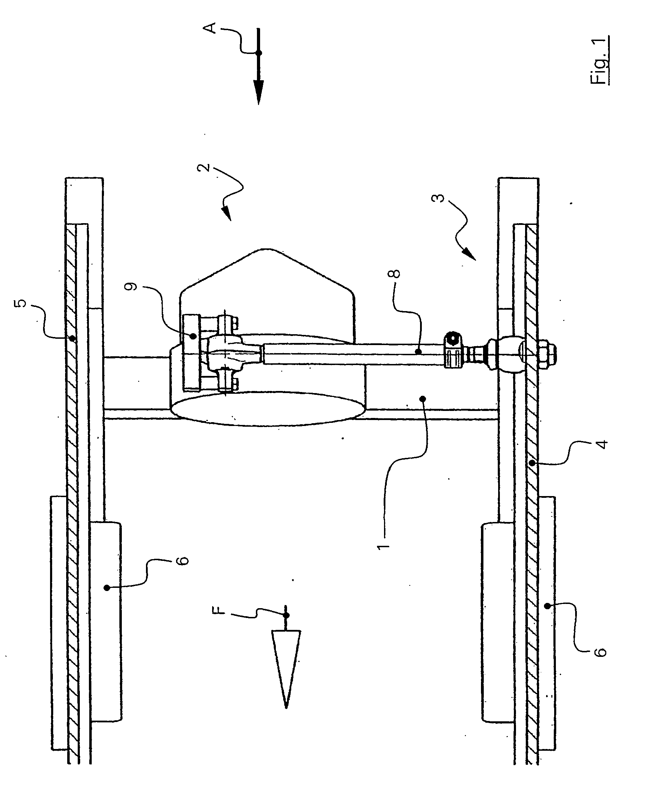

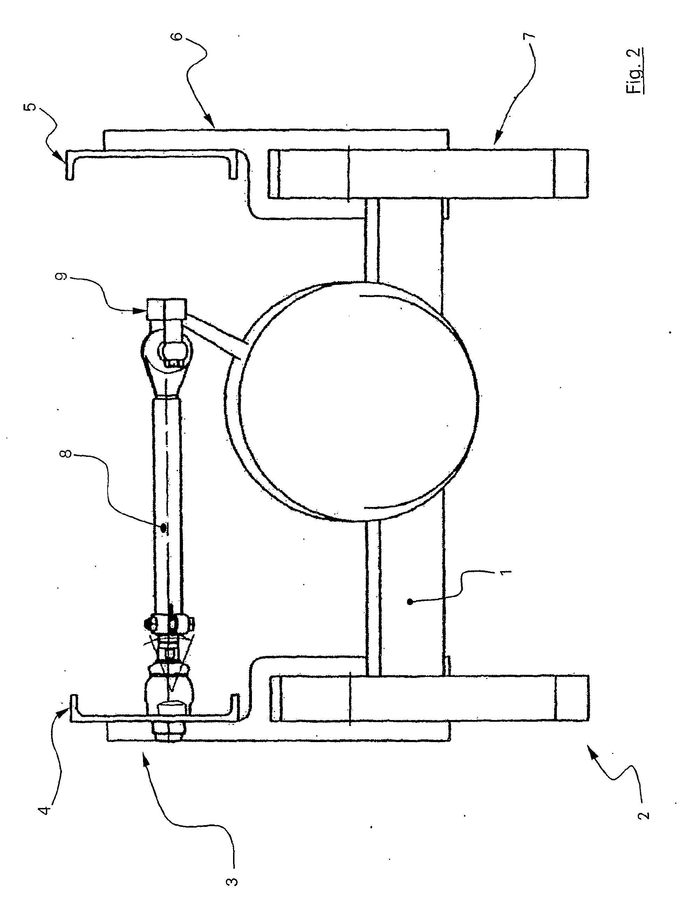

In Fig. 1 und 2 ist in zwei verschiedenen Ansichten der prinzipielle Aufbau einer eine Starrachse 1 aufweisenden Hinterachsanordnung 2 mit einem Fahrzeugchassis 3 gezeigt. Das Fahrzeugchassis 3 besteht dabei im wesentlichen aus einem linken und rechten Längsträger 4, 5, welche jeweils über eine Halterung 6 die die Starrachse 1 mit dem Fahrzeugchassis verbindende Feder 7 aufnimmt. Zwischen dem Fahrzeugchassis 3 und der Starrachse 2 ist ein Panhardstab 8 angeordnet der achsseitig an einer der Starrachse 1 zugeordneten Halterung 9 angebunden ist. An dem der Starrachse 1 abgewandten Ende des Panhardstabes 8 ist dieser unmittelbar am Fahrzeugchassis 3 angelenkt.

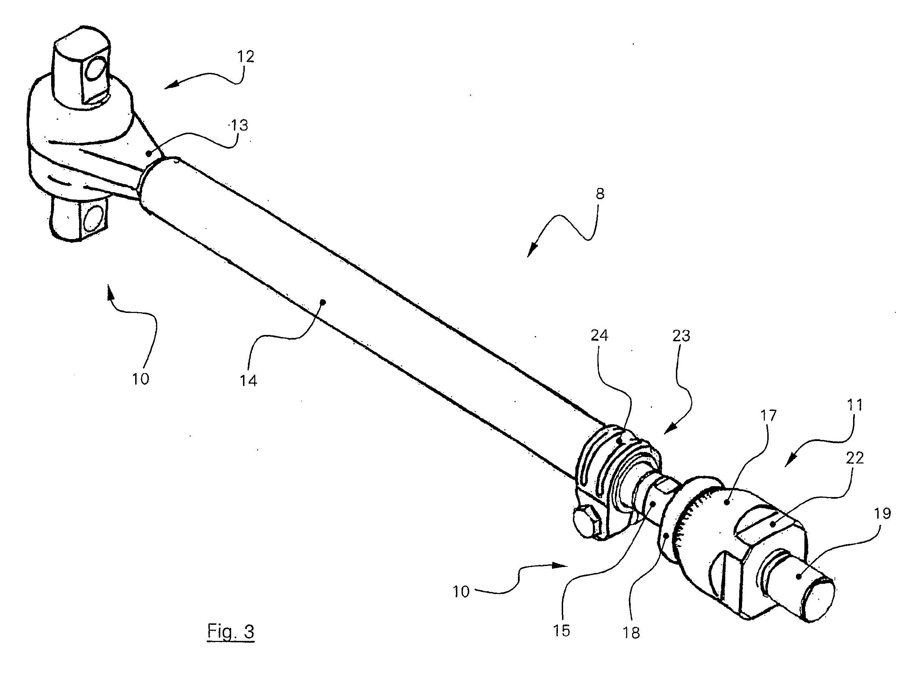

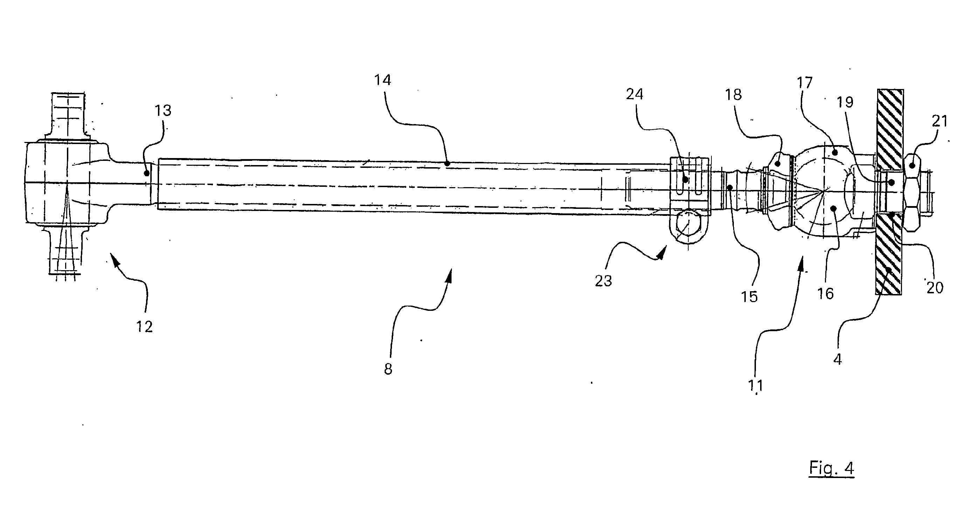

Wie aus Fig. 3 und Fig. 4 zu entnehmen, besitzt der Panhardstab 9 an beiden Enden jeweils ein Gelenkstück 10, wobei das achsseitige Gelenkstück 10 als ein Axialgelenk 11 ausgebildet ist und das chassisseitige Gelenkstück 10 als ein Radialgelenk 12 ausgebildet ist. Radialgelenk 12 und Axialgelenk 11 sind mittels eines Rohres 13 verbunden, wobei die Gelenkstücke 10 mit ihren Lagerzapfen 13 jeweils in die beidseitigen Öffnungen des Rohres 14 eingesteckt sind.

Das Axialgelenk 11 ist im wesentlichen aus einem als Kugelzapfen 15 ausgebildeten Lagerzapfen mit einer Gelenkkugel 16, welche in einer in einem Lagergehäuse 17 aufgenommenen Lagerschale (nicht dargestellt) gleit- und schwenkbeweglich aufgenommen ist, gebildet. Der Öffnungsspalt zwischen Kugelzapfen 15 und Lagergehäuse 17 wird mit einem Dichtungsbalg 18 gegen Schutzeintritt und Schmiermittelaustritt abgedichtet.

Das Lagergehäuse 17 ist mit einem Gewindebolzen 19 versehen, welcher fahrzeugchassisseitig in einer Bohrung 20 des Längsträgers 4 aufgenommen ist. Mittels einer Gewindemutter 21 ist das Lagergehäuse 17 gegenüber dem Fahrzeugchassis 3 verschraubt. Unterstützend ist hierzu am Lagergehäuse 17 ein Schlüsselansatz 22 vorgesehen.

Der Kugelzapfen 15 ist in die Öffnung des Rohres 14 eingesetzt und mittels einer Klemmverbindung 23 gegenüber dem Rohr 14 festgesetzt. Die Klemmverbindung 23 ist auf einfache Art und Weise als eine Schelle 24 ausgebildet, die das vorzugsweise geschlitzte Ende (nicht dargestellt) des Rohres 14 gegenüber dem Kugelzapfen 15 zusammenpresst. Für einen besseren Halt des Kugelzapfens 15 in dem Rohr 14 kann der im Rohr 14 eingesetzte Bereich des Kugelzapfens 15 beispielsweise profiliert oder mit einem Gewinde versehen sein. Des Weiteren kann die Innenfläche des Rohrendes, welche mit dem Kugelzapfen 15 zusammenwirkt ebenfalls profiliert oder mit einem Gewinde versehen sein. Auf diese Weise kann der Kugelzapfen 15 gegenüber dem Rohr 14 in verschiedenen Lagen positioniert werden, es können also in gewissen Grenzen unterschiedliche Längen des Panhardstabes 8 eingestellt werden. Das Radialgelenk 12 ist dagegen mit dem Rohr 14 über beispielsweise eine Schrumpfverbindung oder ähnlich fest verbunden. Für einen vergrößerten Verstellbereich des Panhardstabes könnte diese Verbindung allerdings auch verstellbar ähnlich derjenigen des Axialgelenkes 12 ausgeführt sein

Insgesamt offenbart die Anbindung des Panhardstabes 8 an das Fahrzeugchassis 3 einen sehr einfachen Aufbau mit einer reduzierten Anzahl von Bauteilen. Es ist lediglich eine Verschraubung vorgesehen. Damit erfordert die Aufnahme am Fahrzeugchassis 3 wenig konstruktiven sowie fertigungstechnischen Aufwand. Lediglich eine Aufnahmebohrung 20 am Fahrzeugchassis ist vorzusehen. Diese Maßnahmen minimieren somit die Kosten für die Fertigung und die Montage des Panhardstabes 8. Hierzu trägt auch die Tatsache bei, dass im wesentlichen Standardbauteile, auch für das Axialgelenk, Verwendung finden.

Die Verwendung eines Axialgelenkes anstatt beispielsweise eines Radialgelenkes ermöglicht eine ebenfalls kostenreduzierende Aufweitung der Fertigungstoleranzen. Dies ist in dem konstruktiven Aufbau eines Axialgelenks begründet, da ein Axialgelenk einen erweiterten Schwenkbereich in allen Schwenkrichtungen gegenüber einem Radialgelenk besitzt und auf diese Weise unempfindlicher hinsichtlich einer versetzten Einbaulauge reagiert ohne dass die Funktionsweise beeinträchtigt wird.

Neben der Möglichkeit Winkellagen des Panhardstabes 8 auszugleichen, ist durch die oben beschriebene Längenverstellbarkeit des Panhardstabes 8 mittels der Klemmung 23 des Kugelzapfens 15 innerhalb des Rohres 14 in verschiedenen Lagen der beiden Bauteile zueinander zusätzlich ein Ausgleich in axialer Richtung des Panhardstabes 8 geschaffen worden. Dies vereinfacht zusätzlich die Montage des Panhardstabes 8 und trägt somit zur Reduzierung der Kosten bei.

Alternativ zu dem in Fig. 3 und 4 dargestellten Ausführungsbeispiel mit dem dem Lagergehäuse 17 zugeordneten Gewindebolzen 19 sowie der an dem Kugelzapfen 15 angeordneten Gelenkkugel 16, kann beispielsweise die Anordnung von Lagergehäuse 17 und Gelenkkugel 16 prinzipiell auch vertauscht werden. Somit ist es auch möglich, das Lagergehäuse mit einem Zapfen zu versehen, welcher in das Rohr 13 eingesetzt wird. Demgegenüber wird die Gelenkkugel mit einem Kugelzapfen versehen, der ein Gewindeendstück besitzt, welches in der Bohrung 20 des Fahrzeugchassis 3 aufgenommen und gegen dieses mit einer Gewindemutter 21 verschraubt wird.

Grundsätzlich ist auch ein Vertauschen von Radialgelenk 12 und Axialgelenk 11 möglich, also dass das Radialgelenk des Panhardstabes 8 achsseitig und das Axialgelenk 11 am Fahrzeugschassis 3 angelenkt ist. Ebenso ist auch der Einsatz eines Axialgelenkes sowohl an der Starrachse 3 als auch am Fahrzeugchassis 3 möglich. Aber aus Gründen der Führung der Achse und der Kraftleitung wird die beschriebene und in den Figuren dargestellte Ausführungsform im allgemeinen bevorzugt. Aus diesen genannten Gründen wird allerdings bei einem Längslenker die Anlenkung an das Fahrzeugchassis mit einem Radialgelenk und die Anlenkung an der Starrachse mit einem Axialgelenk umgesetzt. Der Längslenker ist im wesentlichen genauso wie der Panhardstab 8 mit einem Radialgelenk und einem Axialgelenk versehen, welche ebenfalls mit einem Rohr verbunden sind, und ist zumindest annähernd parallel zur Fahrtrichtung F zwischen Starrachse 1 und Fahrzeugchassis 3 angeordnet. Der Aufbau des Axialgelenkes und dessen Anbindung an die Starrachse erfolgt ebenso wie beim oben beschriebenen Ausführungsbeispiel des Axialgelenkes 11 des Panhardstabes 8, welches am Fahrzeugchassis 3 angelenkt ist. Auch eine Längsverschieblichkeit mittels einer Klemmverbindung kann hier beispielsweise realisiert werden.

Die Verwendung eines Axialgelenkes zur achs- oder chassisseitigen Anbindung des Panhardstabes oder des Längslenkers, bewirkt als zusätzlichen Vorteil eine Entlastung des auf dem gegenüberliegenden Ende des Lenkers oder des Panhardstabes eingesetzten Radialgelenkes sowie der Lenkerstruktur. Dies resultiert aus den geringen Torsionsmomenten der Gleitlagerung des Axialgelenkes, welche im Betrieb übertragen werden.

### Bezugszeichenliste

- 1: Starrachse
- 2: Hinterachsanordnung
- 3: Fahrzeugchassis
- 4: Linker Längsträger
- 5: Rechter Längsträger
- 6: Halterung
- 7: Feder
- 8: Panhardstab
- 9: Halterung
- 10: HGelenkstück
- 11: Axialgelenk
- 12: Radialgelenk
- 13: Lagerzapfen
- 14: Rohr
- 15: Kugelzapfen
- 16: Gelenkkugel
- 17: Lagergehäuse
- 18: Dichtungsbalg
- 19: Gewindebolzen
- 20: Bohrung
- 21: Gewindemutter
- 22: Schlüsselansatz
- 23: Klemmverbindung
- 24: Schelle
- A: Pfeil
- F: Fahrtrichtung

## Patentansprüche

1. Kraftfahrzeug, insbesondere Nutzfahrzeug, mit einem Fahrzeugchassis (3) sowie einer eine Starrachse (1) aufweisenden Hinterachsanordnung (2), wobei zwischen dem Fahrzeugchassis (3) und der Starrachse (1) ein Panhardstab (8) zur Seitenkraftabstützung angeordnet ist, wobei der Panhardstab (8) unmittelbar über ein Axialgelenk (11) schwenkbeweglich am Fahrzeugchassis (3) angelenkt ist, und wobei das Axialgelenk (11) als ein Kugelgelenk ausgebildet ist **dadurch gekennzeichnet, dass** der Panhardstab (8) aus einem Rohr (14) und zwei, als ein Radialgelenk (12) und ein Axialgelenk (11) ausgeführten Gelenkstücken (10) gebildet ist, wobei die Gelenkstücke (10) mittels einem Lager- (13) oder einem Kugelzapfen (15) beidseitig in das Rohr (14) eingesetzt sind und zumindest eines der beidseitigen Gelenkstücke (10) axial verschiebbar in dem Rohr (14) des Panhardstabes (8) angeordnet ist und mittels einer Klemmverbindung (23) relativ zum Rohr (14) festgesetzt werden kann.

2. Kraftfahrzeug nach Anspruch 1,
**dadurch gekennzeichnet, dass**
das Kugelgelenk einen Kugelzapfen (15) mit einer Gelenkkugel (16), welche in einem Lagergehäuse (17) gleit- und schwenkbeweglich aufgenommen ist, aufweist.

3. Kraftfahrzeug nach Anspruch 4,
**dadurch gekennzeichnet, dass**
in dem Lagergehäuse (17) eine Lagerschale angeordnet ist, welche die Gelenkkugel (16) gleit- und schwenkbeweglich aufnimmt.

4. Kraftfahrzeug nach Anspruch 2,
**dadurch gekennzeichnet, dass**
das Lagergehäuse (17) an dem Fahrzeugchassis (3) oder an der Starrachse (1) befestigt ist.

5. Kraftfahrzeug nach Anspruch 2,
**dadurch gekennzeichnet, dass**
an dem Lagergehäuse (17) ein Gewindebolzen (19) angeordnet ist:

6. Kraftfahrzeug nach Anspruch 2,
**dadurch gekennzeichnet, dass**
an dem Lagergehäuse (17) ein Schlüsselansatz (22) ausgebildet ist.

7. Kraftfahrzeug nach Anspruch 5,
**dadurch gekennzeichnet, dass**
der Gewindebolzen (19) in einer Bohrung (20) am Fahrzeugchassis (3) oder an der Starrachse (1) aufgenommen ist.

8. Kraftfahrzeug nach Anspruch 1,
**dadurch gekennzeichnet, dass**
die Klemmverbindung (23) von einer Schelle (24) und einem mit der Schelle (24) zusammenwirkenden geschlitzten Ende des Rohres (14) gebildet wird, wobei das geschlitzte ende des Rohres (14) unter radialer Krafteinwirkung durch die Schelle (24) gegen ein in das Rohr (14) eingesetztes Ende eines Lager- (13) und/oder Kugelzapfens (15) eines der beiden Gelenkstücke (10) gehalten ist.

## Claims

1. Motor vehicle, in particular a utility vehicle, having a vehicle chassis (3) and a rear axle arrangement (2) which has a rigid axle (1), a Panhard rod (8) being arranged between the vehicle chassis (3) and the rigid axle (1) in order to support lateral forces, the Panhard rod (8) being articulated directly to the vehicle chassis (3) by means of an axial joint (11) in a pivotably movable manner and the axial joint (11) being constructed as a ball and socket joint,
**characterised in that**
the Panhard rod (8) is formed from a pipe (14) and two articulation pieces (10) which are constructed as a radial joint (12) and an axial joint (11), the articulation pieces (10) being inserted at both sides in the pipe (14) by means of a journal (13) or a ball socket (15) and at least one of the articulation pieces (10) at the two sides being arranged so as to be able to be axially displaced in the pipe (14) of the Panhard rod (8) and being able to be secured relative to the pipe (14) by means of a clamping connection (23).

2. Motor vehicle according to claim 1,
**characterised in that**
the ball and socket joint has a ball socket (15) having an articulation ball (16) which is received in a bearing housing (17) so as to be able to move in a sliding and pivoting manner.

3. Motor vehicle according to claim 4,
**characterised in that**
in the bearing housing (17) there is arranged a bearing shell which receives the articulation ball (16) so as to be able to move in a sliding and pivoting manner

4. Motor vehicle according to claim 2,
**characterised in that**
the bearing housing (17) is secured to the vehicle chassis (3) or to the rigid axle (1).

5. Motor vehicle according to claim 2,
**characterised in that**
a threaded pin (19) is arranged on the bearing housing (17).

6. Motor vehicle according to claim 2,
**characterised in that**
a wrench engagement location (22) is formed on the bearing housing (17).

7. Motor vehicle according to claim 5,
**characterised in that**
the threaded pin (19) is received in a hole (20) on the vehicle chassis (3) or on the rigid axle (1).

8. Motor vehicle according to claim 1,
**characterised in that**
the clamping connection (23) is formed by a clamp (24) and a slotted end of the pipe (14) that co-operates with the clamp (24), the slotted end of the pipe (14) being retained under the action of radial force by the clamp (24) against an end of a journal (13) and/or ball socket (15) of one of the two articulation pieces (10), which end is inserted in the pipe (14).

## Revendications

1. Véhicule automobile, en particulier véhicule utilitaire, comprenant un châssis de véhicule (3) et un agencement d'essieu arrière (2) présentant un essieu rigide (1), dans lequel une barre Panhard (8) est ménagée entre le châssis de véhicule (3) et l'essieu rigide (1) pour supporter les forces latérales, dans lequel la barre Panhard (8) est articulée à pivotement directement via une articulation axiale (11) sur le châssis de véhicule (3) et l'articulation axiale (11) est conformée en joint à rotule,
**caractérisé en ce que**
la barre Panhard (8) est formée d'un tube (14) et de deux pièces articulées (10) se présentant sous la forme d'une articulation radiale (12) et d'une articulation axiale (11), dans lequel les pièces articulées (10) sont insérées des deux côtés dans le tube (14) au moyen d'un tourillon (13) ou d'un pivot sphérique (15) et au moins une des pièces articulées (10) des deux côtés est positionnée de manière à pouvoir glisser axialement dans le tube (14) de la barre Panhard (8) et peut être fixée par rapport au tube (14) au moyen d'un accouplement de serrage (23).

2. Véhicule automobile selon la revendication 1,
**caractérisé en ce que**
le joint à rotule présente un pivot sphérique (15) avec une rotule articulée (16), qui est reçue à coulissement et à pivotement dans un logement de palier (17).

3. Véhicule automobile selon la revendication 4,
**caractérisé en ce que**
une coquille de coussinet est ménagée dans le logement de palier (17), laquelle coquille de coussinet reçoit à coulissement et à pivotement la rotule articulée (16).

4. Véhicule automobile selon la revendication 2,
**caractérisé en ce que**
le logement de palier (17) est fixé sur le châssis de véhicule (3) ou sur l'essieu rigide (1).

5. Véhicule automobile selon la revendication 2,
**caractérisé en ce que**
un boulon fileté (19) est ménagé sur le logement de palier (17).

6. Véhicule automobile selon la revendication 2,
**caractérisé en ce que**
une clavette (22) est prévue sur le logement de palier (17).

7. Véhicule automobile selon la revendication 5,
**caractérisé en ce que**
le boulon fileté (19) est logé dans un perçage (20) ménagé sur le châssis de véhicule (3) ou sur l'essieu rigide (1).

8. Véhicule automobile selon la revendication 1,
**caractérisé en ce que**
l'accouplement de serrage (23) est formé d'un étrier de serrage (24) et d'une extrémité fendue du tube (14) coopérant avec l'étrier de serrage (24), dans lequel l'extrémité fendue du tube (14) est maintenue sous l'effet d'une force radiale par l'étrier de serrage (24) contre une extrémité, insérée dans le tube (14), d'un tourillon (13) et/ou d'un pivot sphérique (15) d'une des deux pièces articulées (10).
